# EUROPEAN PATENT SPECIFICATION

(11) **EP 2 728 641 B1**
(45) Date of publication and mention of the grant of the patent: **22.02.2017**
(21) Application number: 12190882.6
(22) Date of filing: 31.10.2012
(51) Int. Cl.: H01M 2/04, H01M 2/26, H01M 2/30, H01M 10/04, H01M 10/34, H01M 2/12, H01M 10/52

(54) **Low maintenance alkaline electrochemical cell**
Wartungsarme elektrochemische Alkalizelle
Cellule électrochimique alcaline à faible entretien

(43) Date of publication of application: 07.05.2014
(73) Proprietor: SAFT, 93170 Bagnolet (FR)
(72) Inventor: Sjövall, Rune, 247 35 Södra Sandby (SE); Greis, Mikael, 572 50 Oskarshamn (SE)
(74) Representative: Hirsch & Associés

(56) References cited:
- WO-A1-91/20102
- WO-A2-2005/022680
- FR-A1- 2 858 464
- US-A- 4 900 642

## Description

### FIELD OF THE INVENTION

The invention relates to an alkaline electrochemical cell exhibiting a very low water consumption and which thereby offers a longer lifetime with no or low maintenance. The invention further relates to an alkaline battery comprising a plurality of such electrochemical cells.

### BACKGROUND OF THE INVENTION

A rechargeable electrochemical cell (also called "accumulator" or "secondary cell") of the alkaline electrolyte type, such as nickel cadmium and nickel metal hydride types, conventionally comprises:
- one or more positive electrodes, the active material of which most often essentially consists of a nickel-based hydroxide Ni(OH)₂,
- one or more negative electrodes, the active material of which essentially consists of cadmium in the case of a nickel cadmium accumulator or of a hydridable metallic alloy in the case of a nickel metal hydride accumulator,
- a separator placed between each positive and negative electrode, and
- an electrolyte which is a concentrated alkaline solution of a strong base or a mixture of strong bases such as NaOH, KOH or LiOH.

The separator is an electric insulator. It prevents electric contact between a positive electrode and a negative electrode. It is adapted to allow the passage of ions of the electrolyte through it. It may be in the form of a grid.

When the positive electrode is completely charged, the overcharge current causes evolution of oxygen therein. The oxygen escape from the cell is accompanied with a water loss according to reaction (3) below: at the positive electrode :

*4OH⁻ →* O*₂* + *2H₂O* + 4 *e⁻* (1)

at the negative electrode :

4 *e⁻* + *4H₂O → 4OH⁻* + *2H₂* (2)

at the cell level :

2 *H₂O →* 2 *H₂* + O*₂* (3)

The oxygen formed at the positive electrode does not freely escape from the cell. It diffuses as a gas through the separator towards the negative electrode where it is reduced or recombined according to:

*O₂(g)* + *2H₂O* + *4e⁻→ 4OH⁻* (4)

When the negative electrode is overcapacitive with respect to the positive electrode, then a sealed accumulator may be overcharged provided that the internal pressure remains sufficiently low.

The oxygen escape from the cell is accompanied with loss of water from the electrolyte. After a certain time, water topping up is therefore necessary. This unwanted operation needs, however, to be delayed or eliminated to the highest extent.

One way to prolong the topping up intervals is by introducing a felt in order to decrease water consumption, through which oxygen can migrate from the positive to the negative electrode where recombination can finally occur.

Nevertheless, the performance at a high discharge rate decreases in felted cells compared to standard grid cells. Moreover, it is difficult to change electrolyte. Furthermore, it is difficult to provide the user with cells in an empty state, i.e. without being filled with an electrolyte and at a discharged state. Finally, in addition to those problems, manufacturing of felted cells is time consuming.

Besides, in an alkaline battery of the nickel cadmium or of the nickel-metal hydride type comprising pocket plate cells, the cells are connected in a way that is not optimal from an installation and space filling point of view. Indeed, access is often arranged from the top for installation and maintenance, thus the volume of the battery system becomes large.

A solution for delaying water topping-up consists of incorporating in the electrochemical cell an auxiliary electrode, electrically connected to the negative electrode, which is the place of the recombination. Such an electrode for oxygen recombination comprises generally a face which completely or partially absorbs oxygen gas, frequently covered by a catalytic layer, and a hydrophobic face, usually made of PTFE. Such an electrode is described in the patent EP 0 666 608 B1 and has two opposite faces of large surface area. The first face lies against one of the anodes and the second face is in contact with a separator.

Nevertheless, this design has disadvantages and the internal pressure of such a cell certainly will increase during time because of the incomplete recombination of the formed gases which accumulate in the cell top. Furthermore, this type of cell is cumbersome and has reduced volumetric energy.

In consequence, an electrochemical cell is therefore sought after, for which the totality of gases is recombined and particularly all the oxygen dissolved in the electrolyte and the oxygen bubbles, especially at the time of their propagation towards the cell top. Such an electrochemical cell has high performances and a longer lifetime with no or low maintenance.

WO 91/20102 discloses an alkaline electrochemical cell having a cathode, an anode, an alkaline electrolyte, and a porous electrode for use as an oxygen reduction electrode when said electrochemical cell operates at current densities up to 750mA/sq.cm.;
wherein said porous electrode comprises a porous conductive substrate and a porous catalytically active layer on said porous conductive substrate;
wherein said porous conductive substrate is chosen from the group consisting of carbon, graphite, and metal; and
wherein said porous catalytically active layer is chosen from the group consisting of a catalytically active non-noble metal, an oxide of a catalytically active non-noble metal, and carbon together with an oxide of a catalytically active non-noble metal.

US 4,900,642 discloses a rechargeable electrochemical cell having a cylindrical metal oxide cathode, a cylindrical zinc anode, a current collector extending into said anode and an aqueous alkaline electrolyte contacting the anode and cathode, in which cell oxygen may evolve on charge, overcharge, or any reversal of cell polarity; the cell including an auxiliary transfer electrode provided for the anode and physically separated therefrom by a separator sheet but in electronic and ionic contact with said anode, said auxiliary transfer electrode being at least partially wetted by said electrolyte and thereby establishing said ionic contact between said auxiliary transfer electrode and said anode; said auxiliary transfer electrode comprising porous carbon bonded with polytetrafluoroethylene; wherein said current collector pierces said auxiliary transfer electrode and thereby establishes said electronic contact between said auxiliary transfer electrode and said anode; whereby oxygen evolved within said cell is recombined by said auxiliary transfer electrode.

### SUMMARY OF THE INVENTION

The aim of the present invention is to propose an electrochemical cell providing increased safety in case it is charged under a constant voltage. This cell has a high performance and a longer lifetime with no or low maintenance.

One of the objectives of the invention is to trap oxygen and to recombine the totality of the formed oxygen.

This is achieved with an electrochemical cell of the alkaline electrolyte type comprising:
- an alkaline electrolyte (24);
- an electrochemical bundle, comprising at least one electrochemical pair constituted by a positive electrode (14), a negative electrode (16) and a separator interposed in between;
- a positive terminal (30) and a negative terminal (28), the positive electrode of each of the at least one electrochemical pair being electrically connected to the positive terminal and the negative electrode of each of the at least one electrochemical pair being electrically connected to the negative terminal; and
- a device for electrochemical recombination of oxygen,
wherein said device for electrochemical recombination of oxygen comprises a catalytically active substrate (26; 76) adapted for the oxygen recombination to take place, said catalytically active substrate being electrically connected to the negative terminal and electrically isolated from the positive terminal, and said catalytically active substrate being distinct from the electrochemical bundle and in contact with the alkaline electrolyte wherein said electrochemical cell comprises a container (22) comprising a lid (20) ;
- the positive electrode (14) of each of the at least one electrochemical pair is electrically connected to a positive contact plate (72) and the negative electrode (16) of each of the at least one electrochemical pair is electrically connected to a negative contact plate (58), and
- the catalytically active substrate is located in a space between the lid (20) and at least one contact plate chosen among the positive and negative contact plates, and is electrically isolated from the positive contact plate (72)
wherein the catalytically active substrate comprises at least a first hole (78) and a second hole (80) and the positive terminal (30) extends through the first hole (78) to the lid and the negative terminal (28) extends through the second hole (80) to the lid (20).

The device for oxygen recombination enables replacement of the felts by grids and to combine the benefits of the felted cells in terms of oxygen recombination with those of the cells containing grids for the separator.

Thanks to the present invention, it is now possible to recombine the totality of the formed oxygen and particularly to quickly recombine oxygen evacuated in the top of cell, which is at the origin of the cell internal pressure.

This is achieved by using a catalytically active substrate such that the oxygen recombination takes place, and by locating this substrate at the weakest spot, i.e. where the gas must pass before leaving the cell.

By doing so, the intention is to avoid oxygen escape from the cell through a safety vent and to increase the probability for recombination to occur.

The advantages of the invention are a better oxygen recombination which implies a lower internal pressure in operation, an increase in the lifetime in cycling or in float charging conditions thanks to a surplus initial quantity of electrolyte. The recombination is accelerated and a higher volumetric energy is obtained in comparison with solutions using a recombination device localized between the electrodes of the electrochemical bundle.

According to one embodiment, said catalytically active substrate adapted for the oxygen recombination to take place is chosen from the group consisting of a foam, a porous sintered or a stretched expanded metal.

According to one embodiment, said catalytically active substrate adapted for the oxygen recombination to take place is chosen from the group consisting of iron, cobalt and nickel and preferably is nickel.

According to one embodiment, said catalytically active substrate adapted for the oxygen recombination to take place has a porous structure, the pores of said porous structure being substantially devoid of carbon.

According to one embodiment, said catalytically active substrate has an active surface greater than 0.10 cm² for 1 g of said catalytically active substrate for 1 Ah, preferably greater than 1 cm²/g/Ah, preferably greater than 2 cm²/g/Ah.

According to one embodiment, the electrochemical cell comprises a vent (12) comprising a hole forming a gas way (40) and said catalytically active substrate is attached to the vent (12) in such manner that gases pass through the catalytically active substrate before evacuating from the hole of the vent.

According to one embodiment, the catalytically active substrate has a cylinder shape such that oxygen enters in the gas way (40) through the lateral surface of the cylinder and a wire (42) is welded on the lateral surface of the cylinder and is electrically connected to the negative terminal.

The oxygen may also enter in the gas way (40) through the bottom of the cylinder.

According to one embodiment, the positive electrode (14) of each of the at least one electrochemical pair comprises a positive electrode active area and a positive lug (52) extending from the positive electrode active area and the negative electrode (16) of each of the at least one electrochemical pair comprises a negative electrode active area and a negative lug (54) extending from the negative electrode active area, and the catalytically active substrate is further located in a space between the positive lug and the negative lug and the catalytically active substrate is electrically isolated from each positive lug.

According to one embodiment, the catalytically active substrate (26; 76) comprises nickel foam.

According to one embodiment, said electrochemical cell further comprises a device (46) for a chemical catalytic recombination of gases.

According to one embodiment, the device (46) for a chemical catalytic recombination is disposed such that gases leaving the device for electrochemical recombination pass through the device for the chemical catalytic recombination.

The electrochemical cell may be of the vented type or of the valve-regulated type or of the sealed type.

Furthermore, the invention also proposes an alkaline battery comprising a plurality of previously described electrochemical cells.

The previously described electrochemical cells exhibit a high volumetric energy and make it possible to avoid maintenance during the cells life in a format that allows for a much more compact battery and installation.

### BRIEF DESCRIPTION OF THE DRAWINGS

Further features and advantages of the invention will appear from the following description, given as non-limiting examples, with reference to the accompanying drawings listed hereunder:
- Figure 1 is a schematic diagram illustrating the working principle of an electrochemical cell according to the invention;
- Figure 2 is a schematic diagram illustrating the working principle of another electrochemical cell comprising a combined device for both oxygen electrochemical recombination and chemical catalytic recombination of oxygen and hydrogen according to the invention;
- Figure 3 is a zoom of a cutaway view of an electrochemical cell comprising a vent and a device for oxygen electrochemical recombination according to the invention;
- Figure 4 is a zoom of a cutaway view of an electrochemical cell comprising a vent, a device for oxygen electrochemical recombination and a device for a chemical catalytic recombination of oxygen and hydrogen according to the invention;
- Figure 5 illustrates a first embodiment partially broken away of an electrochemical cell according to the invention;
- Figure 6 illustrates the results of recombination efficiency measurements versus the logarithm of the floating current for an electrochemical cell A according to a first embodiment and for an electrochemical cell B of reference;
- Figure 7 illustrates the results of cell voltage measurements versus the logarithm of the floating current for an electrochemical cell A according to a first embodiment and for an electrochemical cell B of reference;
- Figure 8 shows the results of cell voltage measurements versus time at a constant discharge current of C/100 ;
- Figure 9 is a schematic diagram illustrating a second embodiment of an electrochemical cell according to the invention,
- Figures 10A, 10B and 10C illustrate different views of a third embodiment of an electrochemical cell which is not according to the invention,
- Figures 11A, 11B and 11C are schematic diagrams illustrating a fourth embodiment of an electrochemical cell which is not according to the invention,
- Figure 12 illustrates results of recombination efficiency measurements versus the floating current for an electrochemical cell according to a second embodiment. One cell having one foam which is according to the invention and one cell having five foams which is also according to the invention have been compared to one reference cell not comprising any foam; and
- Figure 13 illustrates results of cell voltage measurements versus the floating current for an electrochemical cell according to a second embodiment. One cell having one foam which is according to the invention and one cell having five foams which is also according to the invention have been compared to one reference cell not comprising any foam.

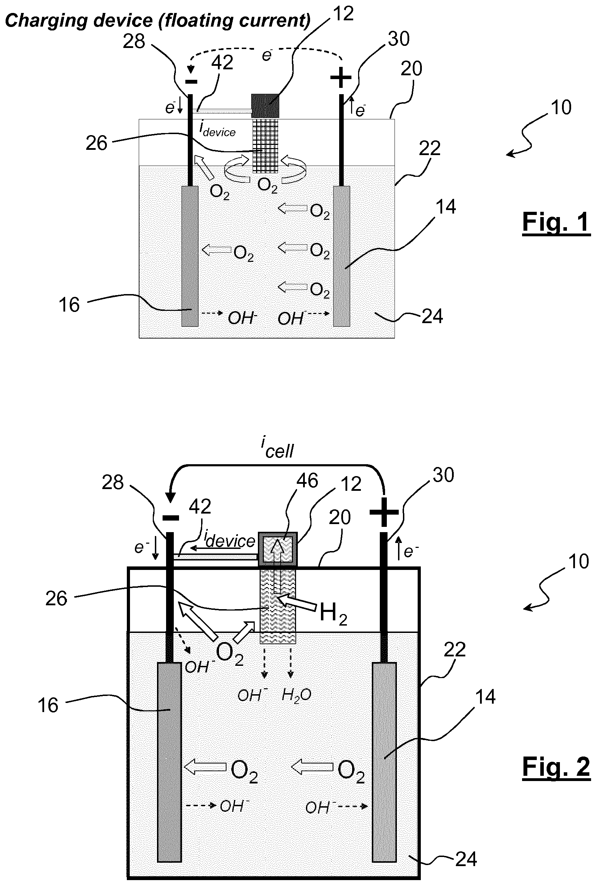

Components in the figures are illustrated for simplicity and clarity and have not necessarily been drawn to scale. For example, the dimensions of some of the battery components in figure 1 may be exaggerated relative to other components to help improving the understanding of the embodiments of the present invention.

In the following description of various embodiments, reference is made to the accompanying drawings, in which are shown by way of illustration various examples of components comprised in an electrochemical cell. Additionally, it is to be understood that other specific arrangements of parts and structures may be utilized and structural and functional modifications may be made without departing from the scope of the present invention. Also, while the terms "top", "bottom", "front", "back", "vertical", "horizontal", "side", "lateral" and the like may be used in this specification to describe various example features and components of the invention, these terms are used herein as a matter of convenience, e.g., based on the example orientations shown in the figures and/or the orientations in typical use. Nothing in this specification should be construed as requiring a specific three dimensional or spatial orientation of structures in order to fall within the scope of this invention.

### DETAILED DESCRIPTION OF THE INVENTION

The present invention applies to any kind of electrochemical cell of the alkaline electrolyte type, for example of the nickel cadmium or the nickel metal hydride type.

The electrochemical cell can be a vented cell, a valve regulated cell or a sealed cell. The definitions of these terms are given in the IEC 60050-482:2004 standard but are repeated below for the sake of clarity.

A vented cell (also called "open cell") has a cover (also called "lid") provided with an opening through which products of electrolysis and evaporation are allowed to escape freely from the cell to the atmosphere.

A valve regulated cell allows a partial recombination of the gases formed during operation of the cell thanks in large part to the presence of void spaces within the cell separator. It is closed but has a valve (also called "a vent") which allows the escape of the gases if the internal pressure exceeds a predetermined value. The cell cannot normally receive additions to the electrolyte.

A sealed cell remains closed and does not release either gas or liquid when operated within the limits specified by the manufacturer. Most of the sealed cells are equipped with a safety vent to prevent burst of the cell in case the cell is used in abusive conditions.

It is particularly advantageous to practice the invention with a cell of the vented type for the following reasons:
1) when such a cell is equipped with the device for the oxygen electrochemical recombination then a high rate of oxygen recombination is achieved. So, a vented cell equipped with the device for the oxygen electrochemical recombination fulfills the requirements of the IEC 62259 standard ;
2) the process of manufacturing the cell is easier since a grid can be used as a separator instead of a felt. As explained above, manufacturing of felted cells is time consuming.

Thus, the invention allows providing a vented cell which achieves a high oxygen recombination rate without having to use a felt.

The electrochemical cell comprises in a conventional manner a container and a lid defining an interior volume.

The electrochemical cell of the alkaline electrolyte type comprises an alkaline electrolyte, an electrochemical bundle mounted in said interior volume, a positive terminal and a negative terminal.

The negative and positive terminals are electrically connected to the electrochemical bundle in the container interior volume through the container wall to the container exterior for supplying power to an electric load.

The electrolyte is a concentrated alkaline aqueous solution comprising at least one hydroxide (KOH, NaOH, LiOH), in a concentration which is generally more than 1 mole/L.

The electrochemical bundle comprises at least one electrochemical pair constituted by a positive electrode, a negative electrode and a separator interposed in between.

The positive electrode of each of the at least one electrochemical pair is electrically connected to the positive terminal and the negative electrode of each of the at least one electrochemical pair is electrically connected to the negative terminal.

The positive electrode of each electrochemical pair comprises a positive electrode active area and a positive lug extending from the positive electrode active area. The positive electrode active area is made of a material which is mainly nickel hydroxide Ni(OH)₂, and possibly one or more hydroxides of other elements such as Zn, Co, Ca, Cd, Mg, Mn, Al, etc., which are syncrystallized with nickel hydroxide.

The negative electrode of each electrochemical pair comprises a negative electrode active area and a negative lug extending from the negative electrode active area. The negative electrode active area is made of a material which may be metal cadmium in a charged state, cadmium hydroxide in a discharged state and also cadmium oxide possible initially in a dry state when the cell is provided to the user without being filled with an electrolyte, for a nickel cadmium accumulator or a hydridable intermetallic compound of AB₅ type, of AB₂ type, or of ABₜ type, with 3.2≤t≤3.5 or any standard material in the art.

Of course, the man skilled in the art will know how to apply the present invention to Ni-Zn battery or other Ni based alkaline batteries.

Several types of electrodes exist which are capable of being used in the cell of the invention, such as sintered electrodes and non-sintered electrodes. A non-sintered electrode is composed of a support serving as a current collector, which is coated with a paste containing the active material and a binder, to which a conductive material is generally added. Once the paste is deposited on or in the support, the whole is compressed and dried in order to obtain an electrode of the desired density and thickness.

Among the non-sintered electrodes, the nickel foam type electrode which has a three-dimensional support, and the plasticized electrode which has a support in the form of a foil of perforated metal or of expanded metal, are distinguished.

The surface of the current collector covered by the active material defines the active area. A portion of the current collector is not covered by the active material and is called lug. It is used for the electrical connection to the terminal.

The electrodes may also be of the pocket type, wherein the active material is kept within a pocket comprising two perforated nickel plated steel strips folded together and serving as current collectors.

Each negative electrode active area and each positive electrode active area are totally immersed in the electrolyte.

The positive electrode of each of the at least one electrochemical pair is electrically connected to the positive terminal via a positive contact plate and the negative electrode of each of the at least one electrochemical pair is electrically connected to the negative terminal via a negative contact plate.

The electrochemical cell further comprises at least one separator placed between each positive and negative electrode. The separator is an electric insulator, generally having a grid shape. The separator is adapted to prevent electric contact between a positive electrode and a negative electrode adjacent to a positive electrode. It is adapted to allow the passage of ions of the electrolyte through it.

Furthermore, the electrochemical cell can comprise a vent arranged in the lid of the container. For example, the vent is a flip-top vent. The vent comprises a body engageable to the cell container and a dispensing spout carried by the body yet moveable from a closed to an open condition relative thereto. The spout forms a gas way. The spout in the closed condition is adapted to interact with the body to prevent a pressure release from the content of the container to which the closure is engaged or engageable. The spout in the open condition is adapted to allow the escape of gases from the container via the body through the gas way.

Figure 1 illustrates such an electrochemical cell 10 comprising such a vent 12. In order to simplify the drawing, only one positive electrode 14 and one negative electrode 16 of the electrochemical bundle are illustrated and the separator is not shown. The vent 12 is arranged in the lid 20.

The negative electrode active area and the positive electrode active area are totally immersed in the electrolyte 24.

According to the invention, the electrochemical cell further comprises a device 26 for electrochemical recombination of oxygen formed when charging the electrochemical cell.

Said device 26 for electrochemical recombination of oxygen comprises a catalytically active substrate adapted for the oxygen recombination to take place.

Moreover said catalytically active substrate is electrically connected to the negative terminal 28 for example through a wire 42 and is electrically isolated from the positive terminal 30.

Furthermore, said catalytically active substrate is distinct from the electrochemical bundle, i.e. said catalytically active substrate is not arranged between the negative electrode active area and the positive electrode active area but is arranged above the negative and positive electrodes, so above the negative and positive active areas. It is located above the negative and negative contact plates i.e. in the top of the container.

Moreover, the catalytically active substrate is in contact with the alkaline electrolyte in order to form a closed circuit between the catalytically active substrate and the negative terminal. Thus, the catalytically active substrate is partially immersed in the electrolyte and preferably, at least 5 % of the active surface of said catalytically active substrate is immersed in the alkaline electrolyte, more preferably at least 10 %.

Preferably, the catalytically active substrate has an active surface greater than 0.10 cm² for 1 g of said catalytically active substrate for a cell capacity of 1 Ah. Preferably it is greater than 1 cm²/g/Ah, and still preferably greater than 2 cm²/g/Ah. The specific active volume of the catalytically active substrate is generally greater than 3 cm³/g/Ah. The active surface is chosen to be large enough in order to enable recombination of the totality of oxygen formed when charging the electrochemical cell. Moreover, the active surface is chosen to be large enough in order to enable acceptable recombination for all cells of a certain cell range, i.e. the span of capacities (Ah) for a certain cell type.

Preferably, the catalytically active substrate adapted for the oxygen recombination to take place is chosen from the group of the transition metals. It is well-known that a "transition metal" is any element in the d-block of the periodic table, which includes columns 3 to 12 of the periodic table.

Moreover, the catalytically active substrate adapted for the oxygen recombination to take place is selected from the group consisting of iron, cobalt or nickel and preferably of nickel.

Furthermore, said catalytically active substrate adapted for the oxygen recombination to take place is preferably in the form of foam, a porous sintered or a stretched expanded metal and preferably a foam.

Indeed, the advantage of a foam structure on the contrary of a plan support or of an expanded surface, such as an expanded metal, is to offer a significant density of mesh by surface unit, and so a significant developed surface, and an easy access to the center of the structure.

In a preferred manner, said catalytically active substrate adapted for the oxygen recombination to take place has a porous structure, the pores of said porous structure being substantially devoid of carbon. The porous structure can have carbon impurities.

Embodiments of the device for electrochemical recombination of oxygen will be later detailed.

The working principle of an electrochemical cell according to the invention will now be described in reference to figure 1.

When the positive electrode 14 is completely charged, the overcharge current causes formation of oxygen therein. The formed oxygen diffuses as a gas towards the negative plate 16 where it is reduced or recombined according to equation (4).

The oxygen dissolved in the electrolyte diffuses as a gas towards the at least immersed part of the catalytically active substrate 26 and it enters at least the immersed part of the catalytically active substrate 26 where it is electrochemically reduced or recombined according to equation (4). Oxygen also diffuses into the thin film of electrolyte formed on the surface of the catalytically active substrate. Indeed, the electrolyte covers the catalytically active substrate 26 by capillary action, thereby creating a thin layer or film of electrolyte.

The reaction of oxygen recombination occurring in the catalytically active substrate 26 is also accompanied with an increase in the floating current. According to IEC 60050-482:2004, a floating battery is a secondary battery whose terminals are permanently connected to a source of constant voltage sufficient to maintain the battery approximately fully charged, and which is intended to supply power to an electric circuit, if the normal power supply is temporarily interrupted. The floating current is the current which flows in the battery such that it is maintained at a fully charged state. This is beneficial for the electrochemical cell since the floating current will bring the positive electrode 14 to a higher state of charge during charging at a constant voltage.

Another way to use these beneficial effects of the device for oxygen recombination according to the invention is to lower the charging voltage to a level where the floating current is equal to that of an electrochemical cell without any device of gas recombination. With this lower charging voltage, the recombination efficiency is improved, though with an unchanged state of charge of the positive electrode.

According to a non-limiting preferred embodiment, the electrochemical cell comprises a vent 12 arranged in the lid 20.

Preferably, the electrochemical cell comprises a device for the chemical catalytic recombination of gases formed when charging the electrochemical cell. Said device is adapted for the chemical recombination of oxygen and hydrogen into water according to equation (5):

*O₂(g)* + *2H₂(g) → 2H₂O* (5)

In a preferred manner, said device for the chemical catalytic recombination of gases is disposed such that gases leaving the device for electrochemical recombination pass through the device for the chemical catalytic recombination. Particularly, the device for the chemical catalytic recombination of gases is placed in the vent to form a "catalytic vent".

The working principle of an electrochemical cell according to the invention will now be described in reference to figure 2. In operation, an electrochemical recombination of oxygen occurs at the negative electrode and at the catalytically active substrate 26 as described previously. The electrochemical recombination of oxygen in the catalytically active substrate is accompanied with a current resulting in a partial discharge of the negative electrode.

Then, if oxygen has not been recombined in the catalytically active substrate, it leaves the device for electrochemical recombination and passes through the device for the chemical catalytic recombination where it is recombined with hydrogen. During this reaction, heat and water are formed. The formed water returns into the container via a hole in the catalytic vent and the catalytically active substrate. A liquid film is formed on the surface of the catalytically active substrate and thereby enables electrochemical recombination of oxygen according to equation 1.

This arrangement of both devices for the electrochemical recombination of oxygen and for the chemical catalytic recombination of oxygen and hydrogen enables to recombine all the oxygen formed when charging the electrochemical cell and provides an electrochemical cell with high performance and a longer lifetime with no or low maintenance.

Later in all the described embodiments of an electrochemical cell the electrochemical cell comprises a vent and preferably a catalytic vent as defined before. Of course, all these embodiments can be devoid of a vent or a catalytic vent which is not an essential feature if the catalytically active substrate is sufficiently large to recombine the totality of oxygen formed when charging the electrochemical cell.

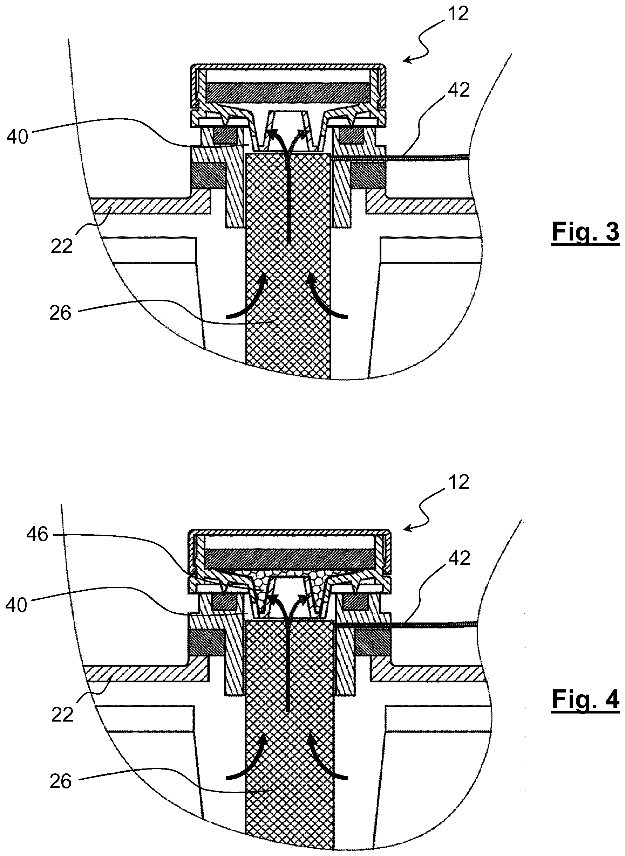

According to a first embodiment of an electrochemical cell according to the invention, the device for electrochemical recombination of oxygen is illustrated on figures 3 and 4. The catalytically active substrate 26 is attached to the vent 12 in such manner that gases pass through the catalytically active substrate 26 before evacuating from the hole of the vent 12.

For example, the catalytically active substrate 26 has a cylinder shape such that oxygen may enter in the gas way 40 through the lateral surface of the cylinder or through the bottom of the cylinder. The cylinder is glued at the bottom area in regard to the electrochemical bundle so that oxygen enters via the cylinder surface. By doing so, the oxygen escape from the electrochemical cell is delayed in order to increase the probability for oxygen recombination to occur. The arrows shown on figures 3 and 4 illustrate the flow of oxygen gas.

Preferably, the catalytically active substrate comprises a nickel foam rolled into the shape of a cylinder. The rolled foam can easily be placed partially in the way of the vent and extends through the interior volume of the container 22. Of course, the catalytically active substrate can have another shape suitable to be placed in the way 40 of the vent 12.

The catalytically active substrate may also be in the form of a massive foam cylinder. Oxygen enters the foam through its lateral surface and/or through its transversal section.

Furthermore, a wire 42 may be connected to the lateral surface of the cylinder, for example by welding, and is electrically connected to the negative terminal. Moreover, the catalytically active substrate 26 is electrically isolated from each positive electrode.

Preferably, the catalytically active substrate extending through the interior volume of the container 22 is located above the negative and positive active areas and preferably in a space between the positive lug and the negative lug and is electrically isolated from each positive lug.

A subembodiment of the first embodiment is illustrated in figure 4 wherein the electrochemical cell further comprises a device 46 for the chemical catalytic recombination of oxygen and hydrogen disposed such that gases leaving the device for the electrochemical recombination pass through the device for the chemical catalytic recombination. Said device for the chemical catalytic recombination is placed in the way of the vent such that gases pass through the device for the chemical catalytic recombination before leaving the vent.

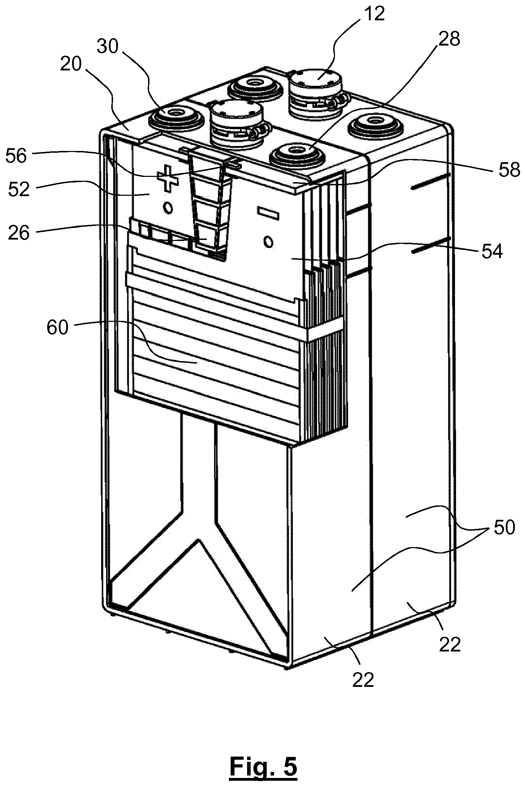

Of course, the catalytically active substrate can have different shapes. The catalytically active substrate 26 may have the form of a truncated cuboid and be located in a space between the positive lug 52 and the negative lug 54. It is electrically isolated from each positive lug 52 as illustrated on figure 5.

A device 56 adapted for the electrical connection is arranged between the catalytically active substrate 26 and the negative terminal 28 via the negative contact plate 58.

Furthermore, the catalytically active substrate 26 is electrically isolated from each positive lug 52.

The positive and negative terminals 30, 28 can be horizontal or vertical and can be located on the or on either side of the container 22.

Figure 5 illustrates two electrochemical cells 50 according to the invention. One of the electrochemical cells 50 is shown partially broken away, to reveal the interior volume containing the electrochemical bundle which here comprises stacked planar electrodes. Each of the stacked planar electrodes comprises an electrode active area 60 and a lug 52, 54 extending from the positive and negative electrodes active area.

### EXAMPLES

A vented electrochemical cell A, of the KL 14 P type according to IEC 60 623, comprising a separator in form of a grid and a device adapted for the oxygen recombination placed in the gas way of a vent has been tested. This type of cell is a vented nickel-cadmium prismatic single cell which is typically used at a low rate of discharge. Its rated capacity is 14 Ah. The electrodes are of the pocket type.

A reference vented electrochemical cell B similar to cell A but devoid of the device adapted for oxygen recombination has been tested for comparison.

The cells were connected in series and charged for 7.5 h at C/5 before starting the recombination efficiency test.

The recombination efficiency was measured according to IEC 62 259 §7.9. The measurement principle may be summarized as follows: the charged capacity is known: it is the floating current multiplied by the time during which the floating current is applied. The theoretical amount of oxygen formed can be calculated from the charged capacity. This theoretical amount of formed oxygen corresponds to a theoretical volume. Then, the actual volume of formed oxygen is measured and compared to the theoretical volume of oxygen. This comparison allows calculating the oxygen recombination rate.

The floating currents used were selected to cover not only 0.005C (log (0.005C) = - 2.3) but also the currents of 0.0007C (log (0.0007C) = - 3.15), 0.0014C (log (0.0014C) = - 2.85) and 0.0022C (log (0.0022C) = - 2.66). The lowest current 0.0007C was obtained by calculating the floating current-to-capacity ratio of cells of the KL 214 P type according to IEC 60 623, and by adapting this ratio to the electrochemical cells A and B. A cell of the KL 214 P type is a vented nickel-cadmium prismatic single cell typically used for a low rate of discharge and having a 214 Ah rated capacity.

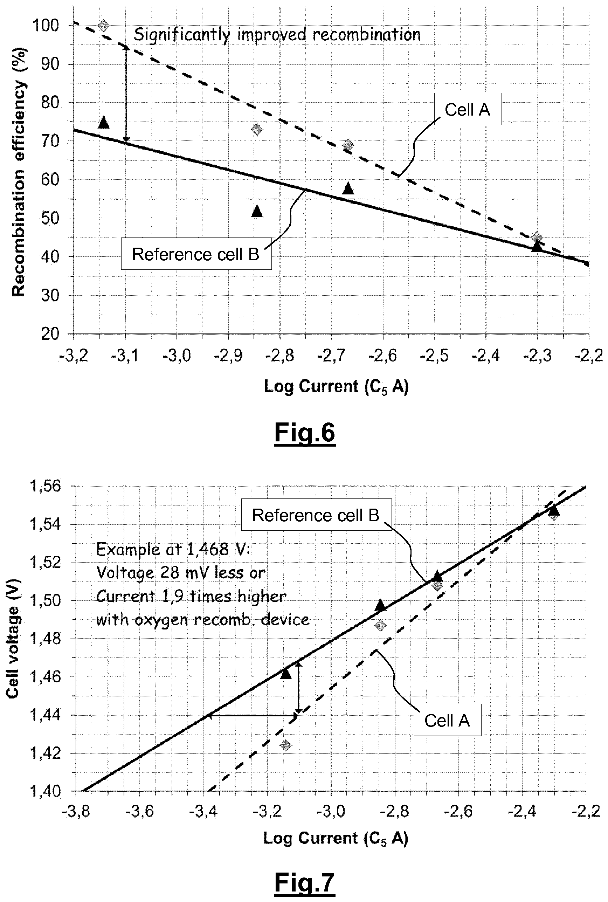

Figure 6 illustrates the recombination efficiency by gas volume measurement as a function of the logarithm of the floating current for electrochemical cells A and B. Results show that there is a significant difference in recombination efficiency at the lowest currents. For the 0.005C current, which is used in the IEC test for felted cells, there is no longer any difference between cells A and B.

Figure 7 illustrates the cell voltage as a function of the logarithm of the floating current for cells A and B. The voltage increases proportionally with current. For the lower currents, this voltage difference is significant, while it is smeared out at higher currents.

Since gas measurements are normally performed within a short period of time they may be somewhat inaccurate. In order to improve accuracy, the recombination efficiency was calculated by measuring the water loss:
- after charging at 1.42V and at room temperature (RT) for 55 days and
- after charging at 1.45V and at room temperature for 84 days.

The measurement principle may be summarized as follows: The charged capacity is known: it is the floating current multiplied by the time during which the floating current is applied. The theoretical amount of oxygen formed can be calculated from the charged capacity. This theoretical amount of oxygen formed corresponds to a theoretical water weight loss. Then, the actual water weight loss is measured and compared to the theoretical water weight loss. This comparison allows calculating the oxygen recombination rate.

The results are summarised in Table 1. In Table 1, the notation "M2- / L2+ / M2-" means that one positive plate of the L-type (according to IEC 60 623) in module 2 size is surrounded by two negative plates of the M-type (according to IEC 60 623) in module 2 size.

Furthermore, tests have been performed on another type of electrochemical cell: cell C. Cell C is of the KL 7.5 P type according to IEC 60 623. This type of cell is a vented nickel-cadmium prismatic single cell typically used at a low rate of discharge. Its rated capacity is 7.5 Ah. The electrodes are of the pocket type. The catalytically active substrate has an active surface substantially equal to 2.4 cm²/g/Ah. Results on electrochemical cell C are compared to a reference electrochemical cell D which differs from cell C in that it is devoid of a device for oxygen electrochemical recombination. The results are summarised in Table 2.

As is evident from the tables, the assembly formed by a vent and a device for oxygen electrochemical recombination according to the invention leads to increased floating current and lower water consumption.

**Table 1**

| Electrochemical cell A or B | 55 days at 1.42V | | 84 days at 1.45V | |
|---|---|---|---|---|
| [M2- / L2+ / M2-] | Test cell A | Reference B | Test cell A | Reference B |
| Floating current (mA) | 8.7 | 4.7 | 10.8 | 7.2 |
| Weight loss (g) | 0.6 | 1.1 | 2.6 | 3.2 |
| Recombination (%_{by weight}) | 83 | 44 | 55 | 19 |
| Recombination (%_{by volume}) | - | - | 83 | 68 |

**Table 2**

| Electrochemical cell C or D | 55 days at 1.42V | | 84 days at 1.45V | |
|---|---|---|---|---|
| [M1+ / L1- / M1+] | Test cell C | Reference D | Test cell C | Reference D |
| Floating current (mA) | 6.7 | 5.5 | 9.9 | 7.9 |
| Weight loss (g) | 0.9 | 1.7 | 3.7 | 4.1 |
| Recombination (%_{by weight}) | 69 | 27 | 36 | 7 |
| Recombination (%_{by volume}) | - | - | 100 | 71 |

In this case, the recombination as calculated from the water weight loss is higher for the KL 14 P cells than for their KL 7.5 P cells counterparts. This is due to the plate configuration of the KL 14 P cells where the two outer electrodes of the electrochemical bundle are negative ones where oxygen recombination can also occur to some extent.

Then, capacity measurements at C/5 and C/100 were performed after 6 months (175 days) storage of the electrochemical cells A and B at room temperature. During this storage period, the device adapted for oxygen recombination was not connected to the negative terminal. During the subsequent capacity measurements, the device adapted for oxygen recombination was connected to the negative terminal again.

After storage, the cells have been "reconditioned". The term of reconditioning should be understood here as a discharge step at a rate of C/5 in order to measure the remaining capacity after storage, followed by a charge step at C/5 and a discharge step at C/5.

Then, for the capacity measurements, a charge step at a rate of C/5 followed by a discharge step at C/100 are carried out.

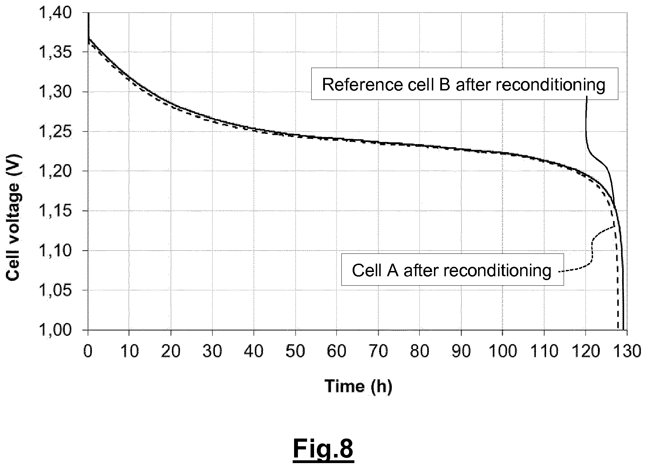

The tests have shown that cells A and B display the same capacity directly after storage. It should be emphasised that the device adapted for oxygen recombination had been disconnected during storage, which means that additional self-discharge due to the device adapted for oxygen recombination has not occurred. The subsequent post-storage measurements show that the reference cell B has the same capacity as the electrochemical cell A as illustrated on figure 8. Thus, the presence of the recombination device does not affect the operating of the cell during discharge.

In conclusion, these tests demonstrated that the oxygen recombination device has significantly improved oxygen recombination during charging at 1.42 and 1.45V at room temperature. So, water consumption has been lowered and charging of the positive electrode has increased in cells having the oxygen recombination device.

For the two electrochemical cells KL 7.5 P of the M1+ / L1-/ M1+ type both using grid separators, based on the values of Tables 1 and 2, the floating current is increased by 22 and 25 % at 1.42 V and 1.45 V respectively and the topping-up interval is 1.9 times and 1.1 times longer at 1.42 and 1.45 V respectively when the cells have a device for oxygen recombination according to the invention in comparison with reference cells.

For the two electrochemical cells KL 14 P of the M2- / L2+ / M2- type both using grid separators, based on the values of Tables 1 and 2, the float current is increased by 90 % and 51 % at respectively 1.42 V and 1.45 V and the topping-up interval is 1.8 times and 1.2 times longer at 1.42 and 1.45 V, respectively when the cells have a device for oxygen recombination according to the invention comparing with standard cells.

Further, the discharge capacity at C/5 and C/100 is the same as in the electrochemical cell with a device for oxygen recombination in comparison with the reference cell without such a device for oxygen recombination.

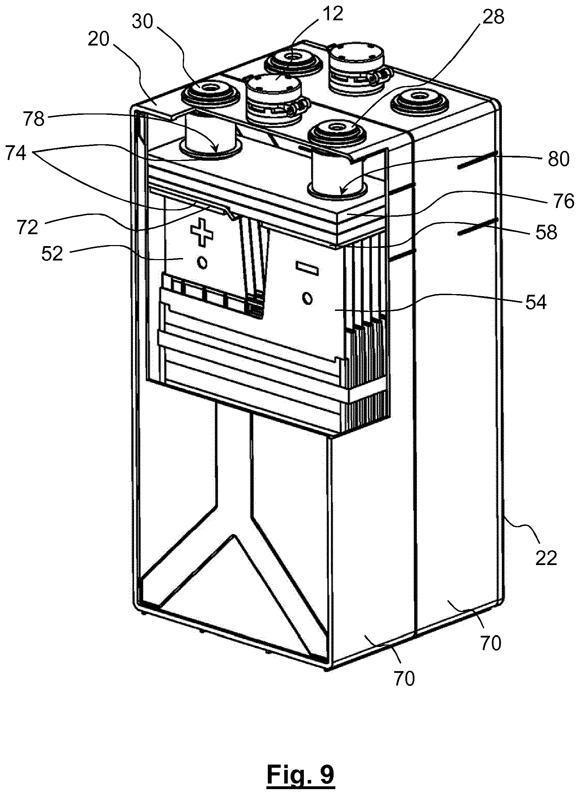

According to a second embodiment of an electrochemical cell according to the invention illustrated on figure 9, the catalytically active substrate 76 is located in a space between the lid 20 and at least one contact plate chosen among the positive and negative contact plates 72, 58. In the example shown on figure 9, the catalytically active substrate 76 is located in a space between the lid 20 and both the positive and negative contact plates 72, 58.

Furthermore, the catalytically active substrate 76 is supported by both the positive and negative contact plates 72, 58. Moreover, the catalytically active substrate 76 is electrically isolated from the positive contact plate 72 as illustrated by an isolating component 74 on figure 9 and of course is electrically connected to the negative contact plate 58.

Preferably, the catalytically active substrate 76 comprises at least one sheet of nickel foam. Three sheets are illustrated on figure 9.

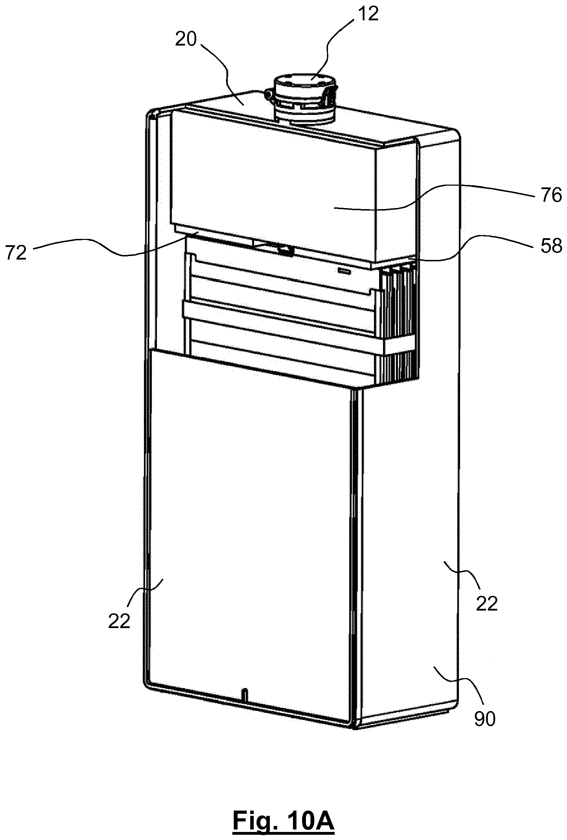

Of course, the catalytically active substrate can have other shapes, for example a parallelepiped shape. For example, such a catalytically active substrate having a parallelepiped shape is illustrated on figures 10A to 10C. Whatever the shape of the catalytically active substrate, the dimensions of the catalytically active substrate are adapted such that all gases pass through the catalytically active substrate before reaching the top of the container or before evacuating from the hole of the vent if any, in order to have a significant oxygen recombination.

Electrolyte is not illustrated, but the level of the electrolyte in the container is such that the catalytically active substrate is in contact with it, i.e. partially immersed in the electrolyte.

In this second embodiment, the catalytically active substrate 76 comprises at least a first hole 78 and a second hole 80 and the positive terminal 30 extends through the first hole 78 to the lid 20 and the negative terminal 28 extends through the second hole 80 to the lid 20.

According to a subembodiment of this second embodiment, the electrochemical cell further comprises a vent 12 as illustrated on figure 9. The catalytically active substrate is localized in such manner that gases pass through the catalytically active substrate before evacuating from the hole of the vent 12.

Furthermore, the catalytically active substrate 76 can have a shape adapted to be introduced in the gas way of the vent. For example, the catalytically active substrate 76 can have a first part and a second part. The first part can have a cylinder shape adapted to be introduced in the gas way of the vent like in the first embodiment as shown in Figs.3 and 4. The second part can have a parallelepiped shape, for example formed by stacked sheets of foam, the first part extending from the second part to the vent.

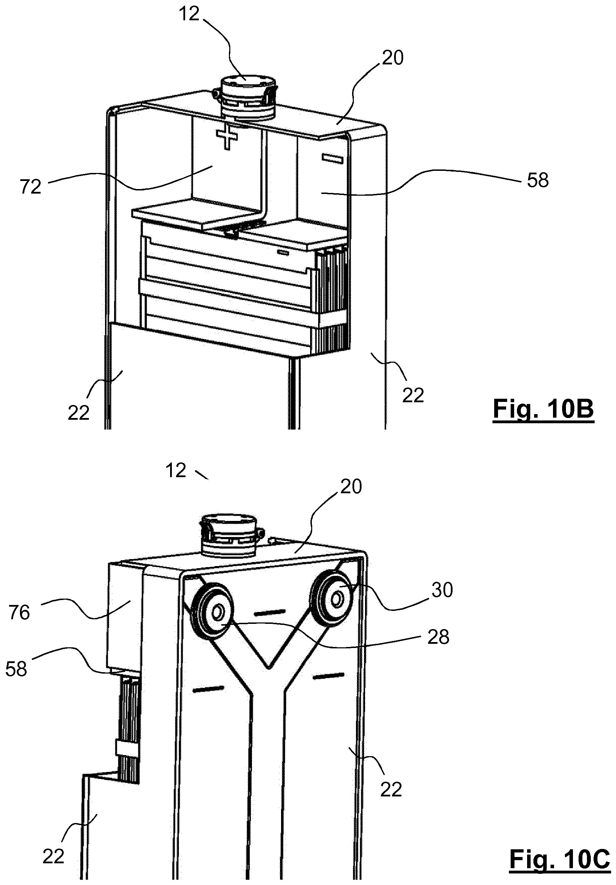

A third embodiment of an electrochemical cell 90 not according to the invention is illustrated on figures 10A, 10B and 10C. This third embodiment is similar to the second embodiment except for the arrangement of the positive and negative terminals. Figure 10B shows the electrochemical cell 90 without the catalytically active substrate 76 in order to see better the arrangement of the terminals.

The catalytically active substrate 76 is located in a space between the lid 20 and at least one contact plate chosen among the positive and negative contact plates 72, 58. Furthermore, the catalytically active substrate 76 is supported by both the positive and negative contact plates 72, 58. Moreover, the catalytically active substrate 76 is electrically isolated from the positive contact plate 72 as illustrated by an isolating component 74 on figure 9 and of course is electrically connected to the negative contact plate 58.

As illustrated on figure 10A, the catalytically active substrate 76 can have a parallelepiped shape. Preferably, the dimensions of the catalytically active substrate are adapted to occupy substantially all the space of the container between the lid of the container and the contact plates 58, 72 in order to have a significant oxygen recombination.

Electrolyte is not illustrated, but the level of the electrolyte in the container is such that the catalytically active substrate is in contact with it, i.e. partially immersed in the electrolyte.

Furthermore, the electrochemical cell 90 can comprise a vent 12 as illustrated on figures 10. The catalytically active substrate is arranged in such manner that gases pass through the catalytically active substrate before evacuating from the hole of the vent 12.

As explained before, the electrochemical cell 90 can comprise a device for a chemical catalytic recombination of gases formed when charging the electrochemical cell 90. Preferably, the device for a chemical catalytic recombination of gases is disposed such that gases leaving the device for electrochemical recombination pass through the device for the chemical catalytic recombination, for example in the gas way of the vent 12.

In this embodiment, not part of the invention, the container has a parallelepiped shape having lateral faces, and the positive terminal 30 and the negative terminal 28 extend through at least one lateral face of the container.

In the example illustrated on figure 10C, the positive terminal 30 and the negative terminal 28 extend through the same lateral face of the container.

Alternatively, the positive terminal and the negative terminal can extend through two different lateral faces of the container, for example two opposed faces of the container.

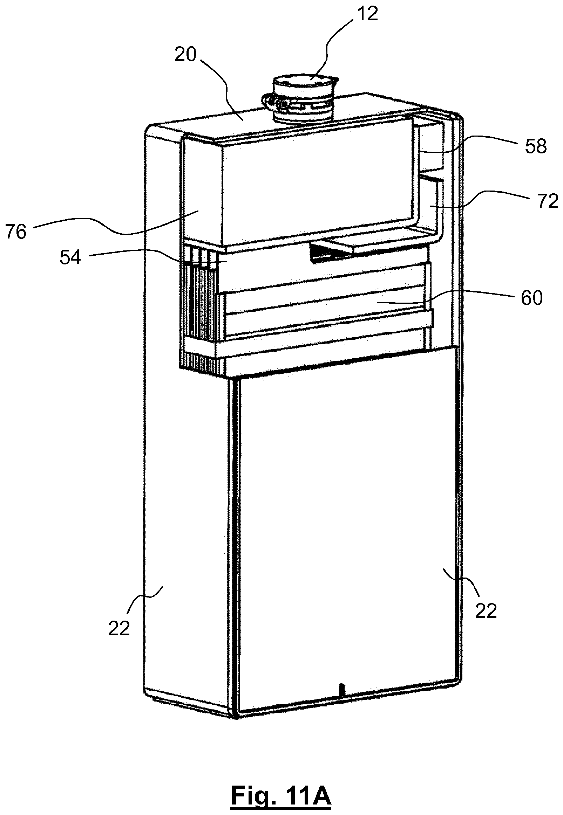

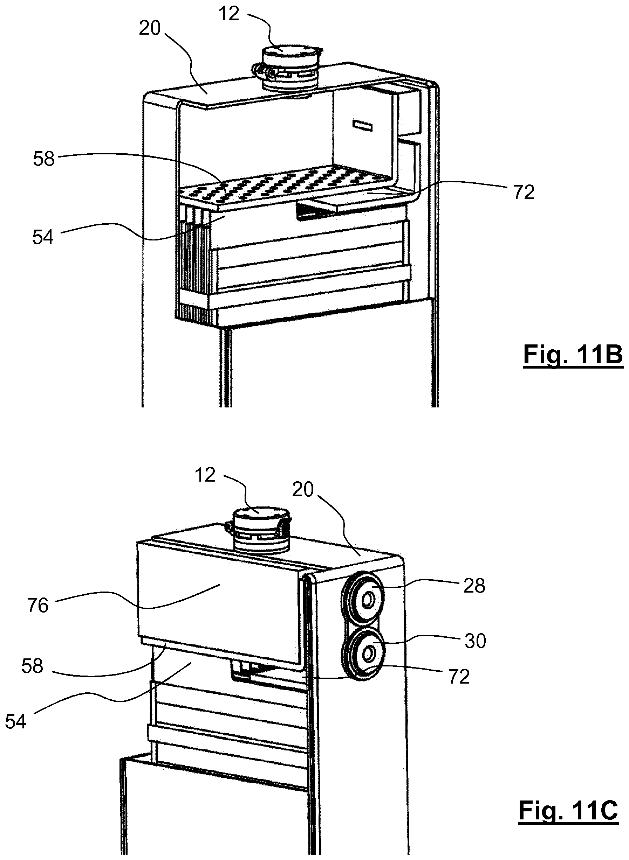

A fourth embodiment of an electrochemical cell not according to the invention is illustrated on figures 11A, 11B and 11C. This fourth embodiment is similar to the third embodiment except for the relative arrangement of the catalytically active substrate 76 and the positive and negative contact plates 72, 58. Figure 11B shows the electrochemical cell 100 without the catalytically active substrate 76 in order to see better the arrangement of the terminals.

In this fourth embodiment, the catalytically active substrate 76 is located in a space between the lid 20 and at least one contact plate chosen among the positive and negative contact plates 72, 58.

In the example shown on figures 11, the negative contact plate 58 is arranged between the lid 20 and the positive contact plate 72. The catalytically active substrate 76 is supported by the negative contact plate 58. The catalytically active substrate 76 is electrically isolated from the positive contact plate 72 as illustrated by an isolated component on figure 11 and is electrically connected to the negative contact plate 58. On figure 11B, the negative contact plate 58 is perforated in order to allow the electrolyte to pass through it to the catalytically active substrate 76

### EXAMPLES

A vented electrochemical cell E of the KM 135 P type according to IEC 60 023 has been tested. A cell of the KM 135 P type is a vented nickel-cadmium prismatic single cell typically used at a medium rate of discharge. Its rated capacity is 135 Ah. This vented electrochemical cell E has a capacity of 135 Ah cell and comprises sheets of nickel foam as described in the second embodiment. Furthermore, it comprises a device adapted for oxygen recombination placed in the gas way of a vent. The cell was not equipped with the device for recombining oxygen and hydrogen but it could have been equipped with such a device.

The number of foam sheets used has been varied in order to study the efficiency when using multiple foams all having the same thickness. When one foam is used, the catalytically active substrate has an active surface of about 0.13 cm²/g/Ah and a specific active volume of about 0.022 cm³/g/Ah. When 5 foams are used, the active surface and the specific active volume are 5 times greater.

Both kinds of oxygen recombination devices shown in figures 5, 9, 10 and 11 are insensitive to changes in cell capacity since a change in capacity is accompanied with a change in cross section of the cell container due to a change of the number of plates required to reach such a capacity. For each positive and negative plate added to the cell, the capacity and the dimension of the cell increases. If the cell length increases then the cross section and the amount of foam also increase. By increasing the number of sheets or the height of the foam body, recombination efficiency is enhanced.

A reference cell having the same features as electrochemical cell E but without the electrochemical oxygen recombination device has also been tested.

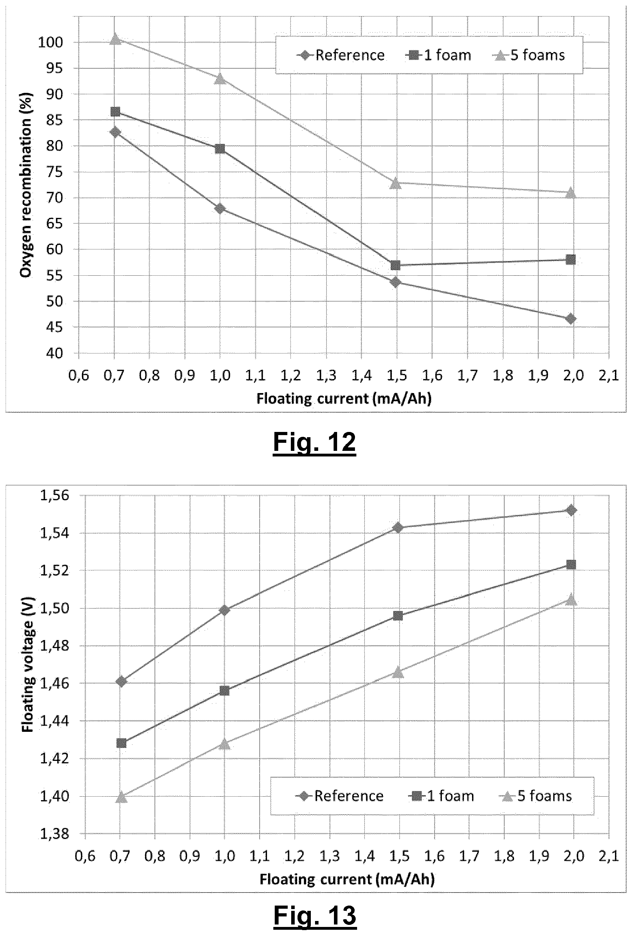

Figures 12 and 13 illustrate results of the tests which demonstrate the difference between electrochemical cells equipped with one or five sheets of foam and a reference cell without any foam. It is clear that there is a significant improvement in the oxygen recombination rate by using the foam of the oxygen recombination device, which is confirmed both by an improved oxygen recombination on figure 12 and a lower float voltage on figure 13 for a given current. The higher the number of foam sheets, i.e. the larger the available nickel surface, the better the recombination rate is and, as a consequence, the lower is the float voltage at a given current.

The decrease in the floating voltage due to recombination observed on figure 13 for the cell comprising an oxygen recombination device having five sheets of foam at a given current is useful because it enables a smaller voltage window without affecting the float current compared to a known cell. In this case, the chargeability of the positive electrode will be maintained at the same time as the water consumption is kept at a low level.

In conclusion, these tests demonstrated that an electrochemical cell comprising a device for oxygen recombination according to the invention has a good working efficiency at normal floating voltages. Furthermore, charging voltage can be lowered and the time for commissioning can be shortened since the positive electrode will reach a higher state of charge faster due to the electrochemical recombination (higher floating current) at constant voltage charging.

Another advantage of the invention is that the respective electrode contact plates located below the lid of the cell allow the space between the electrode contact plates and the lid to serve as an electrolyte reserve and to be used for electrochemical gas recombination via a nickel net with a high active surface.

The invention further relates to an alkaline battery comprising a plurality of electrochemical cells according to the invention. The electrochemical cells are electrically connected to each other in series or in parallel with intercell connectors.

The embodiments of an electrochemical cell not according to the invention wherein positive and negative terminals extend through the lateral faces of the container allow electrolyte filling up and water topping up if necessary. Moreover, a battery comprising such electrochemical cells with such an arrangement of terminals is compact.

The embodiments wherein the terminals extend through the same lateral face of the container makes it possible to install the electrochemical cells in cabinets or stands with access only from the lateral face through which the terminals extend. This reduces the total volume occupied by the battery.

For example, a typical battery stand for 180 cells of the KM 208 P type has a volume with cells equal to 3.65 m³ (L=2850 mm, W=715 mm, H=1795 mm). According to IEC 60 623A, a cell of the KM 208 P type is a vented nickel-cadmium prismatic single cell typically used for a medium rate of discharge having a 208 Ah rated capacity. On the other hand, a battery stand with the new compact design for electrochemical cells according to the invention having the same feature as 180 KM 208 P cells has a volume with cells equal to 1.5 m³ (L=4200 mm, W=200 mm, H=1800 mm). Furthermore, such electrochemical cells can also be delivered discharged and empty, i.e. without electrolyte. Indeed, the installation will be facilitated when the terminals are located on the lateral faces of the container. So, such a battery needs less space at site.

It should be noted more generally that the invention is not limited to the examples described and represented.

## Claims

1. An electrochemical cell of the alkaline electrolyte type comprising:
- an alkaline electrolyte (24);
- an electrochemical bundle, comprising at least one electrochemical pair constituted by a positive electrode (14), a negative electrode (16) and a separator interposed in between;
- a positive terminal (30) and a negative terminal (28), the positive electrode of each of the at least one electrochemical pair being electrically connected to the positive terminal and the negative electrode of each of the at least one electrochemical pair being electrically connected to the negative terminal; and
- a device for electrochemical recombination of oxygen,
wherein said device for electrochemical recombination of oxygen comprises a catalytically active substrate (26; 76) adapted for the oxygen recombination to take place, said catalytically active substrate being electrically connected to the negative terminal and electrically isolated from the positive terminal, and said catalytically active substrate being distinct from the electrochemical bundle and in contact with the alkaline electrolyte,
wherein said electrochemical cell comprises a container (22) comprising a lid (20) ;
- the positive electrode (14) of each of the at least one electrochemical pair is electrically connected to a positive contact plate (72) and the negative electrode (16) of each of the at least one electrochemical pair is electrically connected to a negative contact plate (58), and
- the catalytically active substrate is located in a space between the lid (20) and at least one contact plate chosen among the positive and negative contact plates, and is electrically isolated from the positive contact plate (72), **characterized in that** the catalytically active substrate comprises at least a first hole (78) and a second hole (80) and the positive terminal (30) extends through the first hole (78) to the lid and the negative terminal (28) extends through the second hole (80) to the lid (20).

2. Electrochemical cell according to claim 1, wherein said catalytically active substrate adapted for the oxygen recombination to take place is chosen from the group consisting of a foam, a porous sintered or a stretched expanded metal.

3. Electrochemical cell according to claim 1 or claim 2, wherein said catalytically active substrate adapted for the oxygen recombination to take place is chosen from the group consisting of iron, cobalt and nickel and preferably is nickel.

4. Electrochemical cell according to any one of claims 1 to 3, wherein said catalytically active substrate has an active surface greater than 0.10 cm² for 1 g of said catalytically active substrate for 1 Ah, preferably greater than 1 cm²/g/Ah, preferably greater than 2 cm²/g/Ah.

5. Electrochemical cell according to any one of claims 1 to 4, wherein said electrochemical cell comprises a vent (12) comprising a hole forming a gas way (40) and wherein said catalytically active substrate is attached to the vent (12) in such manner that gases pass through the catalytically active substrate before evacuating from the hole of the vent.

6. Electrochemical cell according to claim 5, wherein the catalytically active substrate has a cylinder shape such that oxygen enter in the gas way (40) through the lateral surface of the cylinder and a wire (42) is welded on the lateral surface of the cylinder and electrically connected to the negative terminal.

7. Electrochemical cell according to any one of claims 1 to 6, wherein the positive electrode (14) of each of the at least one electrochemical pair comprises a positive electrode active area and a positive lug (52) extending from the positive electrode active area and the negative electrode (16) of each of the at least one electrochemical pair comprises a negative electrode active area and a negative lug (54) extending from the negative electrode active area, and wherein the catalytically active substrate is further located in a space between the positive lug and the negative lug and is electrically isolated from each positive lug.

8. Electrochemical cell according to any one of claims 4 to 7, wherein the catalytically active substrate (26; 76) comprises nickel foam.

9. Electrochemical cell according to any one of claims 1 to 8, wherein said electrochemical cell further comprises a device (46) for a chemical catalytic recombination of gases.

10. Electrochemical cell according to claim 9, wherein the device (46) for a chemical catalytic recombination is disposed such that gases leaving the device for electrochemical recombination pass through the device for the chemical catalytic recombination.

11. Electrochemical cell according to any of the preceding claims, which is of the vented type or of the valve-regulated type or of the sealed type.

12. An alkaline battery comprising a plurality of electrochemical cells according to any one of claims 1 to claim 11.

## Patentansprüche

1. Elektrochemische Zelle vom Typ alkalischer Elektrolyt, umfassend:
- einen alkalischen Elektrolyten (24);
- ein elektrochemisches Bündel, umfassend mindestens ein elektrochemisches Paar, bestehend aus einer positiven Elektrode (14), einer negativen Elektrode (16) und einem dazwischen angeordneten Separator;
- eine positive elektrische Klemme (30) und eine negative elektrische Klemme (28), wobei die positive Elektrode jedes des mindestens einen elektrochemischen Paares elektrisch mit der positiven elektrischen Klemme verbunden ist und wobei die negative Elektrode jedes des mindestens einen elektrochemischen Paares elektrisch mit der negativen elektrischen Klemme verbunden ist; und
- eine Vorrichtung für die elektrochemische Wiedervereinigung von Sauerstoff,
wobei die Vorrichtung für die elektrochemische Wiedervereinigung von Sauerstoff ein katalytisch aktives Substrat (26; 76) umfasst, das für das Stattfinden der Sauerstoffwiedervereinigung beschaffen ist, wobei dieses katalytisch aktive Substrat mit der negativen elektrische Klemme verbunden und von der positiven elektrischen Klemme isoliert ist, und wobei dieses katalytisch aktive Substrat von dem elektrochemischen Bündel getrennt und in Kontakt mit dem alkalischen Elektrolyten ist,
wobei diese elektrochemische Zelle einen Behälter (22) umfasst, der einen Deckel (20) aufweist;
- wobei die positive Elektrode (14) jedes des mindestens einen elektrochemischen Paares elektrisch mit einer positiven Kontaktplatte (72) verbunden ist und die negative Elektrode (16) jedes des mindestens einen elektrochemischen Paares elektrisch mit einer negativen Kontaktplatte (58) verbunden ist, und
- sich das katalytisch aktive Substrat in einem Raum zwischen dem Deckel (20) und mindestens einer der zwischen den positiven und negativen Kontaktplatten ausgewählten Kontaktplatte befindet und elektrisch von der positiven Kontaktplatte (72) isoliert ist, **dadurch gekennzeichnet, dass**
das katalytisch aktive Substrat mindestens ein erstes Loch (78) und ein zweites Loch (80) umfasst und sich die positive elektrische Klemme (30) durch das erste Loch (78) bis zum Deckel erstreckt und sich die negative elektrische Klemme (28) durch das zweite Loch (80) bis zum Deckel (20) erstreckt.

2. Elektrochemische Zelle nach Anspruch 1, wobei dieses für das Stattfinden der Sauerstoffwiedervereinigung beschaffene katalytisch aktive Substrat ausgewählt ist aus der Gruppe, bestehend aus einem Schaum, einem porösen gesinterten oder einem gedehnten expandierten Metall.

3. Elektrochemische Zelle nach Anspruch 1 oder Anspruch 2, wobei dieses für das Stattfinden der Sauerstoffwiedervereinigung beschaffene katalytisch aktive Substrat ausgewählt ist aus der Gruppe, bestehend aus Eisen, Kobalt und Nickel, und vorzugsweise Nickel ist.

4. Elektrochemische Zelle nach einem der Ansprüche 1 bis 3, wobei dieses katalytisch aktive Substrat eine aktive Oberfläche aufweist, die pro 1 g dieses katalytisch aktiven Substrats größer ist als 0,10 cm² pro 1 Ah, vorzugsweise größer ist als 1 cm²/g/Ah, vorzugsweise größer ist als 2 cm²/g/Ah.

5. Elektrochemische Zelle nach einem der Ansprüche 1 bis 4, wobei diese elektrochemische Zelle eine Lüftung (12) aufweist, welche ein eine Öffnung umfasst die einen Gasdurchgang (40) bildet, und wobei dieses katalytisch aktive Substrat derart an der Belüftung (12) befestigt ist, dass vor dem Austreten aus der Öffnung der Lüftung die Gase das katalytisch aktive Substrat durchqueren.

6. Elektrochemische Zelle nach Anspruch 5, wobei das katalytisch aktive Substrat eine zylindrische Form aufweist, sodass Sauerstoff durch die laterale Fläche des Zylinders in den Gasdurchgang (40) eintritt, und wobei ein Draht (42) an der lateralen Fläche des Zylinders angeschweißt und elektrisch mit der negativen Klemme verbunden ist.

7. Elektrochemische Zelle nach einem der Ansprüche 1 bis 6, wobei die positive Elektrode (14) jedes des mindestens einen elektrochemischen Paares einen aktiven Bereich der positiven Elektrode und eine positive Fahne (52) umfasst, die sich von dem aktiven Bereich der positiven Elektrode erstreckt, und wobei die negative Elektrode (16) jedes des mindestens einen elektrochemischen Paares einen aktiven Bereich der negativen Elektrode und eine negative Fahne (54) umfasst, die sich von dem aktiven Bereich der negativen Elektrode erstreckt, und wobei das katalytisch aktive Substrat sich weiterhin in einem Raum zwischen der positiven Fahne und der negativen Fahne befindet und elektrisch von jeder positiven Fahne isoliert ist.

8. Elektrochemische Zelle nach einem der Ansprüche 4 bis 7, wobei das katalytisch aktive Substrat (26; 76) Nickelschaum umfasst.

9. Elektrochemische Zelle nach einem der Ansprüche 1 bis 8, wobei diese elektrochemische Zelle weiterhin eine Vorrichtung (46) für eine chemische katalytische Wiedervereinigung von Gasen umfasst.

10. Elektrochemische Zelle nach Anspruch 9, wobei die Vorrichtung (46) für eine chemische katalytische Wiedervereinigung derart angeordnet ist, dass Gase, die die Vorrichtung für elektrochemische Wiedervereinigung verlassen, durch die Vorrichtung für die chemische katalytische Wiedervereinigung durchqueren.

11. Elektrochemische Zelle nach einem der vorhergehenden Ansprüche, die vom belüfteten Typ oder vom ventilgeregelten Typ oder vom abgedichteten Typ ist.

12. Alkalibatterie, umfassend eine Vielzahl von elektrochemischen Zellen nach einem der Ansprüche 1 bis 11.

## Revendications

1. Elément électrochimique du type à électrolyte alcalin comprenant:
- un électrolyte alcalin (24);
- un faisceau électrochimique, comprenant au moins une paire électrochimique constituée par une électrode positive (14), une électrode négative (16) et un séparateur interposé entre les deux;
- une borne positive (30) et une borne négative (28), l'électrode positive de chaque paire électrochimique étant connectée électriquement à la borne positive, et l'électrode négative de chaque paire électrochimique étant connectée électriquement à la borne négative; et
- un dispositif pour la recombinaison électrochimique de l'oxygène,
dans lequel ledit dispositif pour la recombinaison électrochimique de l'oxygène comprend un substrat (26; 76) catalytiquement actif adapté pour la recombinaison d'oxygène, ledit substrat catalytiquement actif étant connecté électriquement à la borne négative et étant isolé électriquement de la borne positive, et ledit substrat catalytiquement actif étant distinct du faisceau électrochimique et en contact avec l'électrolyte alcalin,
lequel élément électrochimique comprend un conteneur (22) comprenant un couvercle (20);
- l'électrode positive (14) de chaque paire électrochimique est connectée électriquement à une plaque de contact positive (72), et l'électrode négative (16) de chaque paire électrochimique est connectée électriquement à une plaque de contact négative (58), et
- le substrat catalytiquement actif est situé dans un espace entre le couvercle (20) et au moins une plaque de contact choisie parmi les plaques de contact positive et négatif, et est isolé électriquement de la plaque de contact positive (72), **caractérisée en ce que**
le substrat catalytiquement actif comprend au moins un premier orifice (78) et un second orifice (80) et la borne positive (30) s'étend à travers le premier orifice (78) jusqu'au couvercle, et la borne négative (28) s'étend à travers le second orifice (80) jusqu'au couvercle (20).

2. Elément électrochimique selon la revendication 1, dans lequel ledit substrat catalytiquement actif adapté de sorte que la recombinaison de l'oxygène ait lieu est choisi dans le groupe consistant en une mousse, un corps fritté poreux ou un métal expansé étiré.

3. Elément électrochimique selon la revendication 1 ou la revendication 2, dans lequel ledit substrat catalytiquement adapté de sorte que la recombinaison de l'oxygène ait lieu est choisi dans le groupe constitué par le fer, le cobalt et le nickel et est de préférence le nickel.

4. Elément électrochimique selon l'une quelconque des revendications 1 à 3, dans lequel ledit substrat catalytiquement actif présente une surface active supérieure à 0,10 cm² pour 1 g dudit substrat catalytiquement actif pour 1 Ah, de préférence supérieure à 1 cm²/g/Ah, de préférence supérieure à 2 cm²/g/Ah.

5. Elément électrochimique selon l'une quelconque des revendications 1 à 4, comprenant un évent (12) comprenant un orifice formant un passage pour les gaz (40) et dans lequel ledit substrat catalytiquement actif est relié à l'évent (12) d'une manière telle que les gaz passent à travers le substrat catalytiquement actif avant d'être évacués par l'orifice de l'évent.

6. Elément électrochimique selon la revendication 5, dans lequel le substrat catalytiquement actif présente une forme de cylindre de sorte que l'oxygène pénètre dans le passage pour les gaz (40) à travers la surface latérale du cylindre et un conducteur (42) est soudé sur la surface latérale du cylindre et est connecté électriquement à la borne négative.

7. Elément électrochimique selon l'une quelconque des revendications 1 à 6, dans lequel l'électrode positive (14) de chaque paire électrochimique comprend une zone active d'électrode positive et une languette positive (52) s'étendant à partir de la zone active d'électrode positive, et l'électrode négative (16) de chaque paire électrochimique comprend une zone active d'électrode négative et une languette négative (54) s'étendant à partir de la zone active d'électrode négative, et dans lequel le substrat catalytiquement actif est en outre situé dans un espace entre la languette positive et la languette négative et est électriquement isolé de chaque languette positive.

8. Elément électrochimique selon l'une quelconque des revendications 4 à 7, dans lequel le substrat (26; 76) catalytiquement actif comprend de la mousse de nickel.

9. Elément électrochimique selon l'une quelconque des revendications 1 à 8, comprenant en outre un dispositif (46) pour la recombinaison catalytique chimique de gaz.

10. Elément électrochimique selon la revendication 9, dans lequel le dispositif (46) pour la recombinaison catalytique chimique est disposé de sorte que les gaz quittant le dispositif de recombinaison électrochimique traversent le dispositif pour la recombinaison catalytique chimique.

11. Elément électrochimique selon l'une quelconque des revendications précédentes, qui est du type ouvert ou du type semi-étanche ou du type étanche.

12. Batterie alcaline comprenant une pluralité d'éléments électrochimiques selon l'une quelconque des revendications 1 à 11.
